# EUROPÄISCHE PATENTSCHRIFT

(11) **EP 2 526 384 B1**
(45) Veröffentlichungstag und Bekanntmachung des Hinweises auf die Patenterteilung: **04.12.2013**
(21) Anmeldenummer: 10708917.9
(22) Anmeldetag: 01.03.2010
(51) Int. Cl.: G01D 3/08, F16C 19/52

(54) **VERFAHREN UND VORRICHTUNG ZUR FRÜHZEITIGEN ERKENNUNG DER ENTSTEHUNG VON SCHÄDEN IN EINEM LAGER**
METHOD AND DEVICE FOR THE EARLY DETERMINATION OF THE APPEARANCE OF DAMAGES IN A BEARING
PROCEDE ET DISPOSITIF POUR LA DÉTERMINATION PRÉCOCE DE LA FORMATION DE DOMMAGES DANS UN PALIER

(43) Veröffentlichungstag der Anmeldung: 28.11.2012
(73) Patentinhaber: Siemens Aktiengesellschaft, 80333 München (DE)
(72) Erfinder: HASSEL, Jörg, 91058 Erlangen (DE); PROBOL, Carsten, 91054 Buckenhof (DE); TISCHMACHER, Hans, 91207 Lauf (DE)
(86) Internationale Anmeldenummer: PCT/EP2010/001259
(87) Internationale Veröffentlichungsnummer: WO 2011/107110

(56) Entgegenhaltungen:
- WO-A1-2008/116433
- WO-A1-2010/007203
- DE-A1- 10 065 314
- US-A1- 2008 141 072

## Beschreibung

### Fachgebiet der Erfindung

In elektrischen Maschinen können elektrische Ströme (Lagerströme, engl.: Bearing Currents) in Lagern auftreten, die die Lebensdauer dieser Lager erheblich reduzieren. Lagerströme sind elektrische Ströme die in Wälz- oder Gleitlagern elektrischer Maschinen stattfinden.

Sie werden durch elektrische Spannungen (Lagerspannungen) hervorgerufen, die aufgrund elektrischer oder magnetischer Streufelder innerhalb der Maschine oder durch Fremdströme, die von Außen kommend über die Maschine fließen, entstehen. Sobald die Lagerspannung über der Durchbruchspannung (Frittspannung) des Schmierfilms liegt, findet der Stromfluss statt.

Die negative Wirkungen von Lagerströmen sind beispielsweise
- Fettverbrennung (Reduzierung der Restschmierfähigkeit)
- Kraterbildung in der Laufbahn und den Wälzkörpern
- und im Extremfall: Riffelbildung in den Laufbahnen.

Die Riffel sind quer zur Laufbahn ausgerichtet.

Diese Lagerströme sind seit Jahrzehnten ein bekanntes Phänomen und führen zu erheblichem Aufwand bei Anwendern bzw. zu hohen Gewährleistungskosten bei Herstellern. Es besteht daher ein großes Interesse an einem Messverfahren bzw. an Sensoren, die Lagerströme messen und aussagekräftig bewerten können.

### Stand der Technik

Lagerströme an elektrischen Maschinen, insbesondere bei Betrieb mit Leistungselektronik, können die Lebensdauer der Motorlager um ein Vielfaches reduzieren. Nach dem derzeitigen Stand der Technik werden durch elektrische Lagerströme geschädigte Lager erst bei Auffälligkeit, z. B. durch Geräuschentwicklung oder verbranntes Lagerfett, bemerkt und ausgetauscht. Dies führt oft zu Anlagenstillständen die enorme Kosten verursachen.

Ein großes Problem beim Betrieb des Lagers ist daher, den voraussichtlichen Zeitpunkt des Ausfalls und damit den optimalen Zeitpunkt des Lager-Austausches zu erkennen. Wird zu früh reagiert bedeutet dies unnötig hohe Wartungskosten, bei zu spätem Reagieren hat der Benutzer Anlagenstillstandskosten.

Die Diagnose der Ursache und das Bewerten von Lösungen geschehen derzeit anhand von Kurzzeit-Lagerstrommessungen bzw. Schwingungsanalysen. Die Aussagekraft dieser Messungen ist begrenzt durch die Betrachtung einzelner Messungen eines zeitlich typisch auf wenige Tage begrenzten Zeitraumes, zudem noch von unterschiedlichen Spezialisten. Änderungen an Einflussfaktoren wie dem Erdungssystem oder Fehler im Erdungssystem, die vor oder nach den Messungen auftreten, können hiermit beispielsweise nicht festgestellt werden.

Bisherige Versuchsstände an Lagerströmen haben aufgrund der Fokussierung auf elektrische Größen bzw. Schwingungsanalysen kaum Erkenntnisse zur Verhinderung von Schädigungen durch Lagerströme erzielt. Gleiches gilt auch bei Messungen im Feld. Ein Zusammenhang zwischen elektrischer Messung und Schwingungsmessung ist aufgrund des nicht aufnehmbaren Zeitstempels nicht möglich. Durch die unterschiedlichen Messsysteme werden Zeit-Differenzen verursacht.

Die Druckschrift WO 2008/116433 offenbart ein Verfahren zur frühzeitigen Erkennung der Entstehung von Schäden in einem Lager, verursacht durch das Fließen eines Lagerstroms, wobei eine Auswertung erstellt wird anhand von zumindest einer Langzeitmessung von zumindest einer für das Auftreten von Lagerströmen charakteristischen Messgröße während des Lager-Betriebs. Anhand der Auswertung der Messergebnisse wird eine Darstellung erzeugt.

Im Zusammenhang mit der Überwachung des Zustandes von Rotorblättern in einem Windkraftwerk ist aus der DE 100 65 314 bereits bekannt, dass ein Mustervergleich durchgeführt wird zwischen am Rotorblatt gemessenen Werten (beispielsweise in einem normierten Frequenzbereich) und entsprechenden normierten Darstellungen aus Messungen oder Modellrechnungen.

Auch die US 2008141072 beschreibt Methoden zur frühzeitigen Erkennung der Entstehung von Schäden in elektronischen Systemen, mittels Trendanalysen und Langzeitmessungen.

Abhilfen gegen Lagerströme und dadurch verursachten Lagerschädigungen sind oft mit erheblichen Kosten verbunden sind und lassen sich auch nur schwer in der Hinsicht bewerten, ob sie ausreichen werden. Kostenintensive Maßnahmen haben in der Vergangenheit z. T. trotzdem nicht zum gewünschten Ziel geführt.

Aufgabe der Erfindung ist es, eine Lösung für die oben genannten Probleme anzugeben. Es soll ein Messverfahren und eine Vorrichtung angegeben werden, welches eine bessere Bewertung der Lagerströme hinsichtlich einer potentiellen Schädigung des betroffenen Lagers zulässt. Weiterhin soll ein Verfahren und eine Vorrichtung angegeben werden, welches zur Analyse der Ursache eines schädlichen Lagerstroms geeignet ist.

### Darstellung der Erfindung

Diese Aufgabe wird gelöst durch ein Verfahren gemäß Patentanspruch 1. Das Verfahren zur frühzeitigen Erkennung der Entstehung von Schäden in einem Lager verursacht durch das Fließen eines Lagerstroms beinhaltet folgende Schritte: Erstellung einer Auswertung anhand von zumindest einer Langzeit-Messung von zumindest einer für das Auftreten von Lagerströmen charakteristischen Messgröße während des Lager-Betriebs abhängig von der Lagerstromamplitude und Erstellung einer Abbildung der Mess-Ergebnisse anhand der Auswertung und Auswertung der Abbildung anhand einer Mustererkennung.

Die Aufgabe wird weiterhin gelöst gemäß Patentanspruch 13 durch eine Vorrichtung.

Die Vorrichtung zur frühzeitigen Erkennung der Entstehung von Schäden in einem Lager verursacht durch das Fließen eines Lagerstroms, beinhaltet Mittel zur Auswertung von zumindest einer Langzeit-Messung von einer für das Auftreten von Lagerströmen charakteristischen Messgröße während des Lagerströmen charakteristischen Messgröße während des Lager-Betriebs abhängig von der Lagerstromamplitude und Mittel zur Erstellung einer Abbildung der Mess-Ergebnisse anhand der Auswertung und Mittel zur Auswertung der Abbildung mittels Mustererkennung.

Weitere vorteilhafte Ausgestaltungen sind in den Unteransprüchen angegeben.

In einer ersten Ausführungsform werden die Messungen in einem Lagerstrom-Versuchsstand durchgeführt:
die Ursache der Lagerströme wird durch Langzeit-Lagerstrommessungen in einem Versuchsstand ermittelt, die Messzeit ist dabei zumindest länger als 1 ms, es kann sich aber auch um Messungen in einem Zeitraum von Tagen handeln.
   - Es wird das Motorlager definiert elektrisch und mechanisch belastet,
   - Es werden neben der elektrischen Belastung (Lagerstrom und -spannung) auch die mechanischen Belastung und weitere Parameter wie Lastverteilung und Zeitdauer oder Frequenzbereich der Funkenentladungen zeitlich koordiniert aufgezeichnet, bei einem Lager (Rollenlager, Kugellager, Wälzlager, Gleitlager) beispielsweise Lagerfett-Zustand, mechanische Schwingungen, Temperatur.
   - Es wird über einen längeren Zeitraum (> 1 Stunde, typisch einige Tage) gemessen
   - Die Untersuchungen erfolgen automatisiert und mit zeitlichen Bezug untereinander.

Ziel ist es, den Zusammenhang zwischen den Messmethoden heraus zu arbeiten und mittels der Kombination und dem mathematischen Zusammenhang dieser unterschiedlichen physikalischen Messwerte die Sicherheit der Schadensanalyse zusteigern.

In einer weiteren Ausführungsform wird eine Messung auf Anlagen vor Ort durchgeführt:
Durch einen Lagerstromsensor, der "online" während des Betriebes kontinuierlich die Lagerströme überwacht und in einer vorteilhaften Ausführung auch ausgewählte Betriebsparameter protokolliert, die messtechnisch oder über das Steuergerät ermittelt wurden, wird folgender Mehrwert generiert:
   - Ein für Lagerströme relevanter Defekt im Erdungssystem wird zeitnah erkannt, bevor eine Schädigung auftritt. Durch die Messung der Schwingungen des Lagers kann eine drohende Schädigung dann sicher vorhergesagt werden und Reparaturmaßnahmen zu einem für den Kunden kostenoptimalen akzeptabeln Zeitpunkt durchgeführt werden.

Die Notwendigkeit für die Einführung bzw. Kontrolle einer Lagerisolation kann so ebenfalls erkannt werden. Auch die Messung von Lagerstrom- und Spannung, sowie der Erdgrößen führt auf eine Erkennung eines Defekts. Beispiel für so einen Defekt sind eine verschlissene Erdungsbürste oder ein schadhaftes Filterelement.

Ein für Lagerströme relevanter Defekt im Erdungssystem oder eine aus Lagerstrom-Sicht schädliche Änderung im Erdungssystem wird zeitnah erkannt, bevor eine Schädigung auftritt. Eine drohende Schädigung kann dann vorhergesagt werden und Reparaturmaßnahmen zu einem für den Kunden akzeptabeln Zeitpunkt durchgeführt werden.

Anhand der Betriebsparameter und der Schädigung der Lager können ungünstige Konstellationen von Lagertypen und Lagerparametern, mechanischer und elektrischer Belastung erkannt und für weitere Projekte vermieden werden.

Durch eine spezielle Auswertung einer Darstellung in Histogramm-Form (alternativ auch Balkendiagramm) können unterschiedliche Arten von Lagerströmen unterschieden werden. Die Kenntnis der Art der Lagerströme ermöglicht eine gezielte, kostengünstige Abhilfe.

### Beschreibung der bevorzugten Ausgestaltungsformen

### Lagerstrom-Versuchsstand:

Durch den Schritt von Kurzzeit-Messungen zu LangzeitMessungen (beispielsweise mittels dem in Druckschrift DE 10 2005 027 670 beschriebenen Messverfahren) und durch die Kombination mit der Messung mechanischer Größen wird die Unzulänglichkeit der bisherigen Fokussierung auf primär elektrische Größen und eine relativ geringe Anzahl von Betriebszuständen umgangen. Das Problem bisheriger Messungen ist die geringe Aussagefähigkeit von Lagerstrommessungen in Bezug auf drohende Schädigung der Lager. Dies wird durch die erweiterte Messmethode, in der verschiedene physikalische Messgrößen mit einander korreliert werden, zu hoher Aussagefähigkeit gebracht. Durch das neue Verfahren werden Zusammenhänge nun eindeutig erkennbar und mit mathematischen Verfahren sicher auswertbar. So können durch automatisierte Auswertungen Schäden an den Maschinen verhindert werden.

Messung auf Anlagen vor Ort, z. B. im Rahmen von Condition Monitoring:
- Durch die "online"-Analyse vor Ort unter Einsatz neuer Technologie werden Änderungen am Erdungssystem oder defekte Komponenten des Erdungssystems erkannt, die sich auf die Lagerströme negativ auswirken können. Nach bisherigen Verfahren würden diese Faktoren erst bei erfolgter Schädigung der Lager durch Geräuschentwicklung oder Ausfall bemerkt werden. Mit der neuen Messmethode wird eine sichere Aussage ermöglicht, die beispielsweise den Ausfall des z. B. Motors vorhersagt und in einem Condition Monitoring System so ausgewertet, das eine Reparaturmaßnahme in die Wartungszyklen eingeplant werden kann. Es können auch Trendanalysen durchgeführt werden, welche eine Erkennung der Verschlechterung des Systems über die Laufzeit und damit eine Berechnung des potentiellen Zeitpunkts eines Ausfalls ermöglichen. Dies hat positive Auswirkungen auf Kosten bzw. Verfügbarkeit der Anlagen.

### Spezielle Auswertung:

Anhand von Histogrammen der gemessenen Lagerströme können die Lagerstromarten unterschieden werden: EDM, Zirkularströme und Rotor-Erdströme. Dabei erfolgt die Auswertung unter Kenntnis der typischen Histogramm-Verteilungen für verschiedene Lagerstromarten.

Sowohl der Lagerstrom-Versuchsstand als auch die Online-Diagnose basieren darauf, dass ein Lagerstrom- oder Lagerspannungssensor am Motor dauerhaft installiert wird. Weitere Sensoren zum Erfassen weiterer elektrischer oder nichtelektrischer Größen, z. B. Schwingungen, sind möglich.

Im Umrichter-Betrieb werden beispielsweise oft Strom- und / oder Spannungssensoren für die Motor-Phasen und manchmal Temperatursensoren in der Motorwicklung verwendet.

Im Lagerstrom-Versuchsstand können ebenfalls mechanische Größen wie Last und Lastverteilung im Lager verfügbar oder wählbar sein. In der Motor-Steuerung können Drehzahl, Drehmoment und weitere Größen vorliegen. Diese Messwerte werden in der Lagerstrom-Auswertung berücksichtigt.

Die Lagerstrom-Auswertung kann als unabhängige Komponente ausgeführt sein oder in die Motorsteuerung integriert werden.

Auch ohne Motor-Steuerung - z. B. bei Betrieb ohne FrequenzUmrichter - ist die Messung nach dem dargestellten Prinzip durchführbar. In diesem Fall kommuniziert die Lagerstrom-Auswerteeinheit direkt mit der Schnittstelle zum Benutzer. Die Schnittstelle zum Benutzer kann auch in die Auswerteeinheit integriert sein.

Sollten die Lagerströme bei der Inbetriebnahme unter Berücksichtigung weitere mechanischer oder sonstiger Parameter unter einer bestimmten Schwelle liegen, ist die Inbetriebnahme aus "Lagerstrom-Sicht" erfolgreich durchgeführt worden. Es erfolgt hierüber eine Anzeige für den Benutzer. Diese Anzeige in der Schnittstelle zum Benutzer kann indirekt über die Motor-Steuerung oder direkt von einer Lagerstrom-Auswerteeinheit veranlasst werden.

Bei Überschreiten der Schwelle kann der Inbetriebsetzer benachrichtigt werden, so dass eine Abhilfe erfolgen kann.

Eine Fern-Diagnose ist ebenfalls in das Konzept integrierbar. Hierfür sind die Daten per Funk, leitungsgebunden, über Glasfaser oder über einen anderen Kommunikationsweg zu übertragen. In einer besonders vorteilhaften Ausführung kann der Benutzer die Art der Auswertung über Steuerbefehle verändern, um die Analysen zu verfeinern. Dies sind z. B. Messbereichsumschaltung, Messfilter-Umschaltung, Anzahl der Messungen pro Sekunde, Änderung der Auswerte-Parameter wie Histogramm-Intervallbreite bei statistischer Auswertung. Eine Anzeige braucht sich nicht auf eine ja / nein-Aussage zu beschränken. Es sind auch mehrstufige Aussagen bis hin zu grafischen statistischen Auswertungen machbar.

### Kurzbeschreibung der Zeichnungen

Im Folgenden wird die Erfindung anhand von Ausführungsbeispielen erläutert. Dabei zeigen
- Figur 1: ein Histogramm von Messwerten eines Lagers mit zirku-laren Lagerströmen,
- Figur 2: ein Histogramm von Messwerten eines Lagers mit EDM (Electric Discharge Magnetic) Lagerströmen,
- Figur 3: ein Diagramm des Verfahrens der Motordiagnose mittels Lagerstrom-Messung.

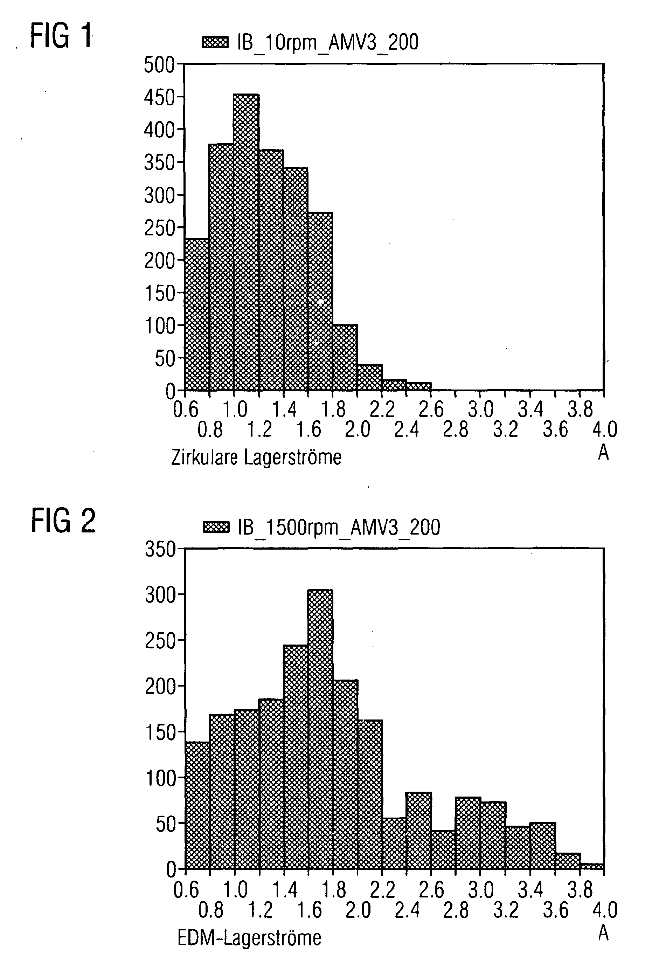

In den Figuren 1 und 2 sind die oben beschriebenen Histogramm Auswertungen dargestellt. Die Anzahl der Lagerströme pro Zeiteinheit wird für bestimmte Lagerstromamplituden-Intervalle visualisiert. In Figur 1 treten beispielsweise 450 Lagerströme pro Sekunde mit Amplituden im Bereich 1,0 A bis 1,2 A auf.

Die zirkularen Lagerströme weisen ein Histogramm gemäß der Figur 1 auf, das nach dem erreichen der maximalen Häufigkeit im Intervall (hier: 1,0 - 1,2 A) stark abfällt.

Die EDM (Electric Discharge Machining)-Lagerströme (insbesondere Funkenerosion) weisen hingegen eine größere Streuung hin zu großen Stromamplituden auf, so wie dies beispielhaft in Figur 2 dargestellt ist.

Die Amplituden der gemessenen Lagerströme zeigten für EDM-Lagerströme eine deutlich größere Streuung hin zu größeren Stromamplituden als für die zirkularen Lagerströme. Dabei wurden durch geeignete Vor-Verarbeitung der Messdaten anhand der Zeitdauer der Ereignisse nur Lagerströme mit Funkenbildung berücksichtigt. Diese können zum Beispiel dadurch erkannt werden, dass nur Ereignisse ausgewertet werden, die schneller als 20 ns sind. Die bekannten Abhilfemaßnahmen können - abhängig von den Messergebnissen - angewendet werden. So kann mit Hilfe des Diagramms nicht nur ein drohender Schaden des Lagers voraus gesagt werden, sondern es kann auch das Verhalten des Lagers auf eventuelle Fehler untersucht werden, welche dann behoben werden können, beispielsweise eine fehlende oder defekte Isolation im Lager.

Typische Abhilfen sind Filterelemente, Änderungen im Erdungskonzept z. B. durch Veränderung der Schirmkontaktierung, durch Anbringung zusätzlicher Potentialausgleichleiter im Erdungssystem, Änderung von Leitungslängen, Einsatz isolierter Motorlager und Wellen-Erdungsbürsten, die das Motorlager elektrisch überbrücken. Ein Einbau in Generatoren ist ebenfalls durchführbar. Auch hier treten zum Teil Lagerströme auf, die die Lebensdauer der Lager reduzieren können bzw. Wartungsintervalle verkürzen. Das Verfahren verhält sich dort analog.

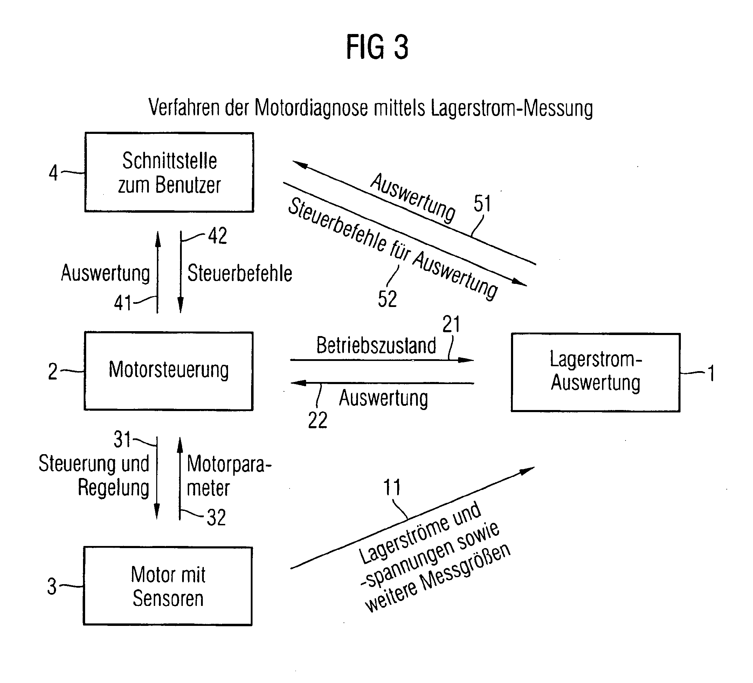

Die Figur 3 zeigt einen Überblick über das erfindungsgemäße Verfahren mit seinen ggf. beteiligten Komponenten. Eine Lagerstrom-Auswertungs-Einheit 1 überwacht den Betriebszustand der Motorsteuerung 21 und meldet diesen bei Bedarf an die Motorsteuerung zurück 22. Die Motorsteuerung 2 selber steuert und regelt 31 den Motor 3 mit den betroffenen Lagern und die zugehörigen Sensoren. Die Sensoren können dabei Motorparameter 32 an die Motorsteuerung und Messgrößen gemäß des erfindungsgemäßen Verfahrens (Lagerströme, -spannungen und weitere Messgrößen) an die Lagerstrom-Auswertung melden 11. Weiterhin kann eine Schnittstelle für den Benutzer 4 vorgesehen sein, welche sowohl von der Motorsteuerung 2 selber als auch von der Lagerstrom-Auswerteeinheit 1 mit Daten versorgt wird 41. Der Benutzer kann von hier aus mittels Steuerbefehlen 42, 52 den Motor und die Auswerteeinheit nach Bedarf steuern.

Neben der Inbetriebsetzungs-Phase ist auch die Anwendung des Verfahrens zum Herleiten genereller Aussagen und Grenzwerte bzw. Schwellen (Lagerstrom-Versuchsstand und Erkenntnissen aus Feld-Daten über Lagerströme, Betriebszustände und ggf. Schädigungen) vorteilhaft.

Durch Trendaussagen sind Veränderungen durch den Anlagenbetrieb detektierbar.

## Patentansprüche

1. Verfahren zur frühzeitigen Erkennung der Entstehung von Schäden in einem Lager verursacht durch das Fließen eines Lagerstroms, wobei
eine Auswertung (22, 51) erstellt wird anhand von zumindest einer Langzeit-Messung von zumindest einer für das Auftreten von Lagerströmen charakteristischen Messgröße während des Lager-Betriebs (21) abhängig von der Lagerstromamplitude und
eine Darstellung der Mess-Ergebnisse anhand der Auswertung erfolgt **dadurch gekennzeichnet, dass**
die Darstellung ein Histogramm ist welches pro Lagerstromamplitudenintervall die Anzahl der Lagerströme pro Zeitintervall aufzeigt und
die Darstellung mittels Mustervergleich ausgewertet wird.

2. Verfahren nach Patentanspruch 1, **dadurch gekennzeichnet, dass** die Messgröße eine für die Entladezeit und -Amplitude charakteristische Größe ist, insbesondere eine der folgenden: die Lagerstrom-Amplitude oder die Lagerspannung oder die Steilheit der Lagerspannung oder eine indirekte Größe wie das elektrische oder elektromagnetische Feld.

3. Verfahren nach Patentanspruch 1 oder 2, **dadurch gekennzeichnet, dass** die Langzeit-Messung des Lagers auf einem Versuchsstand unter Belastung durchgeführt wird.

4. Verfahren nach Patentanspruch 1 oder 2, **dadurch gekennzeichnet, dass** die Langzeit-Messung des Lagers in der Anlage durchgeführt wird.

5. Verfahren nach einem der vorherigen Patentansprüche,
**dadurch gekennzeichnet, dass**
die Darstellung eine graphische Darstellung ist.

6. Verfahren nach einem der vorherigen Patentansprüche,
**dadurch gekennzeichnet, dass**
ein Lagerstrom- und/oder Lagerspannungssensor am Motor dauerhaft installiert wird.

7. Verfahren nach einem der vorherigen Patentansprüche,
**dadurch gekennzeichnet, dass**
die Detektion der Ursache eines potentiellen Schadens am Lager durch die Erkennung eines charakteristischen Musters in der Darstellung der Auswertung geschieht.

8. Verfahren nach einem der vorherigen Patentansprüche,
**dadurch gekennzeichnet, dass**
die Detektion der Ursache durch die Erkennung einer Veränderung des Musters in der Darstellung während der Langzeitmessung entsteht, insbesondere in Form einer Trendanalyse.

9. Verfahren nach einem der vorherigen Patentansprüche,
**dadurch gekennzeichnet, dass**
weitere Sensoren zur Erfassung weiterer Messgrößen vorhanden sind, insbesondere zumindest einen der folgenden Parameter Schwingungen, Temperatur, Klemmenspannung im Motor, Fettzustand, Motorstrom, oder Umrichterparameter.

10. Verfahren nach einem der vorherigen Patentansprüche,
**dadurch gekennzeichnet, dass**
die Detektion von möglichen Schäden bei Inbetriebnahme des Lagers durchgeführt wird.

11. Verfahren nach einem der vorherigen Patentansprüche,
**dadurch gekennzeichnet, dass**
die Messdaten per Fernabfrage abgefragt werden.

12. Verfahren nach einem der vorherigen Patentansprüche,
**dadurch gekennzeichnet, dass**
der Benutzer die Art der Auswertung über Befehle steuern kann, insbesondere Änderungen im Messbereich, Messfilter, Messfrequenz, Auswerteparameter und Histogramm-Intervallbreite.

13. Vorrichtung zur frühzeitigen Erkennung der Entstehung von Schäden in einem Lager verursacht durch das Fließen eines Lagerstroms, mit
Mitteln zur Auswertung (1) von zumindest einer Langzeit-Messung von einer für das Auftreten von Lagerströmen charakteristischen Messgröße während des Lager-Betriebs abhängig von der Lagerstromamplitude und
Mitteln zur Erstellung einer Darstellung der Mess-Ergebnisse anhand der Auswertung, **dadurch gekennzeichnet, dass**
die Darstellung ein Histogramm ist welches pro Lagerstromamplitudenintervall die Anzahl der Lagerströme pro Zeitintervall aufzeigt und
mit Mitteln zur Auswertung der Darstellung durch Mustervergleich.

14. Vorrichtung nach Patentanspruch 13, **dadurch**
**gekennzeichnet dass** die Messgröße eine für die Entladezeit und -Amplitude charakteristische Größe ist insbesondere eine der folgenden: die Lagerstrom-Amplitude oder die Lagerspannung oder die Steilheit der Lagerspannung oder eine weitere indirekte Größe wie das elektrische oder elektromagnetische Feld.

15. Vorrichtung nach Patentanspruch 13 oder 14, **dadurch gekennzeichnet dass**
die Langzeitmessung auf einem Versuchsstand durchgeführt wird.

16. Vorrichtung nach Patentanspruch 13 oder 14, **dadurch gekennzeichnet dass**
dass die Langzeit-Messung des Lagers in der Anlage durchgeführt wird.

17. Vorrichtung nach einem der Patentansprüche 13 bis 16, **dadurch gekennzeichnet, dass**
die Darstellung eine graphische Darstellung ist.

18. Vorrichtung nach einem der Patentansprüche 13 bis 17, **gekennzeichnet durch**
zumindest einen Lagerstrom- und/oder Lagerspannungssensor am Motor.

19. Vorrichtung nach einem der Patentansprüche 13 bis 18, **gekennzeichnet durch**
Mittel zur Detektion der Ursache eines potentiellen Schadens **durch** die Erkennung eines charakteristischen Musters in der Darstellung der Auswertung.

20. Vorrichtung nach einem der Patentansprüche 13 bis 19, **gekennzeichnet durch**
weitere Sensoren zur Erfassung weiterer Messgrößen, insbesondere für Schwingungen, Temperatur, Klemmenspannung im Motor, Fettzustand, Motorstrom, oder Umrichterparameter.

21. Vorrichtung nach einem der Patentansprüche 13 bis 20, **gekennzeichnet durch**
weitere Mittel zur Fernabfrage der für das Auftreten von Lagerströmen charakteristischen Messgröße.

22. Vorrichtung nach einem der Patentansprüche 13 bis 21, **gekennzeichnet durch**
Mittel zur Steuerung der Art der Auswertung über Befehle steuern, insbesondere Änderungen im Messbereich, Messfilter, Messfrequenz, Auswerteparameter und Histogramm-Intervallbreite.

## Claims

1. Method for the early detection of the development of damage in a bearing caused by the flow of a bearing current, whereby
an evaluation (22, 51) is created based on at least one long-term measurement of at least one measured variable which is characteristic of the occurrence of bearing currents during the bearing operation (21) according to the bearing current amplitude and
a representation of the measurement results based on the evaluation is created, **characterised in that**
the representation is a histogram which displays the number of bearing currents per time interval for each bearing current amplitude interval and
the representation is evaluated by means of pattern comparison.

2. Method according to claim 1, **characterised in that** the measured variable is a variable which is characteristic of the discharge time and amplitude, in particular one of the following: the bearing current amplitude or the bearing voltage or the slope of the bearing voltage or an indirect variable such as the electrical or electromagnetic field.

3. Method according to claim 1 or 2, **characterised in that** the long-term measurement of the bearing is carried out on a test bed under load.

4. Method according to claim 1 or 2, **characterised in that** the long-term measurement of the bearing is carried out in the installation.

5. Method according to one of the preceding claims,
**characterised in that**
the representation is a graphical representation.

6. Method according to one of the preceding claims,
**characterised in that**
a bearing current sensor and/or bearing voltage sensor is permanently installed on the motor.

7. Method according to one of the preceding claims,
**characterised in that**
the detection of the cause of a potential occurrence of damage to the bearing is effected through the recognition of a characteristic pattern in the representation of the evaluation.

8. Method according to one of the preceding claims,
**characterised in that**
the detection of the cause is effected through the recognition of a variation in the pattern in the representation during the long-term measurement, in particular in the form of a trend analysis.

9. Method according to one of the preceding claims,
**characterised in that**
further sensors for registering further measured variables are present, in particular at least one of the following parameters: vibrations, temperature, terminal voltage in the motor, grease state, motor current, or inverter parameters.

10. Method according to one of the preceding claims,
**characterised in that**
the detection of possible damage is carried out during startup of the bearing.

11. Method according to one of the preceding claims,
**characterised in that**
the measured data is acquired by remote access.

12. Method according to one of the preceding claims,
**characterised in that**
the user can control the type of the evaluation by means of commands, in particular changes in the measuring range, measuring filter, measuring frequency, evaluation parameters and histogram interval width.

13. Device for the early detection of the development of damage in a bearing caused by the flow of a bearing current, comprising
means for the evaluation (1) of at least one long-term measurement of a measured variable which is characteristic of the occurrence of bearing currents during the bearing operation according to the bearing current amplitude and means for the creation of a representation of the measurement results based on the evaluation, **characterised in that** the representation is a histogram which displays the number of bearing currents per time interval for each bearing current amplitude interval and
means for the evaluation of the representation by means of pattern comparison.

14. Device according to claim 13, **characterised in that** the measured variable is a variable which is characteristic of the discharge time and amplitude, in particular one of the following: the bearing current amplitude or the bearing voltage or the slope of the bearing voltage or a further indirect variable such as the electrical or electromagnetic field.

15. Device according to claim 13 or 14, **characterised in that** the long-term measurement is carried out on a test bed.

16. Device according to claim 13 or 14, **characterised in that** the long-term measurement of the bearing is carried out in the installation.

17. Device according to one of claims 13 to 16, **characterised in that**
the representation is a graphical representation.

18. Device according to one of claims 13 to 17,
**characterised by**
at least one bearing current sensor and/or bearing voltage sensor on the motor.

19. Device according to one of claims 13 to 18,
**characterised by**
means for the detection of the cause of a potential occurrence of damage through the recognition of a characteristic pattern in the representation of the evaluation.

20. Device according to one of claims 13 to 19,
**characterised by**
further sensors for registering further measured variables, in particular for vibrations, temperature, terminal voltage in the motor, grease state, motor current, or inverter parameters.

21. Device according to one of claims 13 to 20,
**characterised by**
further means for remote access to the measured variable which is characteristic of the occurrence of bearing currents.

22. Device according to one of claims 13 to 21,
**characterised by**
means for controlling the type of the evaluation by means of control commands, in particular changes in the measuring range, measuring filter, measuring frequency, evaluation parameters and histogram interval width.

## Revendications

1. Procédé pour la détection précoce de l'apparition de dommages dans un palier causés par l'écoulement d'un courant de palier, une évaluation (22, 51) étant établie à l'aide d'au moins une mesure de longue durée d'au moins une grandeur de mesure caractéristique pour l'apparition de courants de palier pendant le fonctionnement du palier (21) en fonction de l'amplitude du courant de palier et une représentation des résultats de mesure étant effectuée à l'aide de l'évaluation, **caractérisé en ce que** la représentation est un histogramme qui montre le nombre de courants de palier par intervalle de temps pour chaque intervalle d'amplitude de courant de palier et **en ce que** la représentation est évaluée au moyen d'une comparaison de motifs.

2. Procédé selon la revendication 1, **caractérisé en ce que** la grandeur de mesure est une grandeur caractéristique pour le temps et l'amplitude de décharge, et plus particulièrement l'une des suivantes : l'amplitude du courant de palier ou la tension de palier ou la pente de la tension de palier ou une grandeur indirecte, telle que le champ électrique ou électromagnétique.

3. Procédé selon la revendication 1 ou 2, **caractérisé en ce que** la mesure de longue durée du palier est effectuée sur un banc d'essai sous contrainte.

4. Procédé selon la revendication 1 ou 2, **caractérisé en ce que** la mesure de longue durée du palier est effectuée dans l'installation.

5. Procédé selon l'une des revendications précédentes, **caractérisé en ce que** la représentation est une représentation graphique.

6. Procédé selon l'une des revendications précédentes, **caractérisé en ce qu'**un capteur de courant de palier et/ou un capteur de tension de palier sont installés à demeure sur le moteur.

7. Procédé selon l'une des revendications précédentes, **caractérisé en ce que** la détection de la cause d'un dommage potentiel au niveau du palier s'effectue par reconnaissance d'un motif caractéristique dans la représentation de l'évaluation.

8. Procédé selon l'une des revendications précédentes, **caractérisé en ce que** la détection de la cause est obtenue par reconnaissance d'une modification du motif dans la représentation pendant la mesure de longue durée, en particulier sous la forme d'une analyse de tendance.

9. Procédé selon l'une des revendications précédentes, **caractérisé par** la présence d'autres capteurs pour détecter d'autres grandeurs de mesure, en particulier au moins l'un des paramètres suivants : vibrations, température, tension aux bornes du moteur, état du lubrifiant, courant du moteur ou paramètres de convertisseur.

10. Procédé selon l'une des revendications précédentes, **caractérisé en ce que** la détection d'éventuels dommages est effectuée lors de la mise en service du palier.

11. Procédé selon l'une des revendications précédentes, **caractérisé en ce que** les données de mesure sont interrogées par interrogation à distance.

12. Procédé selon l'une des revendications précédentes, **caractérisé en ce que** l'utilisateur peut commander le type d'évaluation par l'intermédiaire d'ordres, en particulier de modifications de la plage de mesure, du filtre de mesure, de la fréquence de mesure, de paramètres d'évaluation et de la largeur d'intervalle d'histogramme.

13. Dispositif pour la détection précoce de l'apparition de dommages dans un palier causés par l'écoulement d'un courant de palier, comportant des moyens pour évaluer (1) au moins une mesure de longue durée d'une grandeur de mesure caractéristique pour l'apparition de courants de palier pendant le fonctionnement du palier en fonction de l'amplitude du courant de palier et des moyens pour créer une représentation des résultats de mesure à l'aide de l'évaluation, **caractérisé en ce que** la représentation est un histogramme qui montre le nombre de courants de palier par intervalle de temps pour chaque intervalle d'amplitude de courant de palier, et comportant des moyens pour évaluer la représentation au moyen d'une comparaison de motifs.

14. Dispositif selon la revendication 13, **caractérisé en ce que** la grandeur de mesure est une grandeur caractéristique pour le temps et l'amplitude de décharge, et plus particulièrement l'une des suivantes : l'amplitude du courant de palier ou la tension de palier ou la pente de la tension de palier ou une autre grandeur indirecte, telle que le champ électrique ou électromagnétique.

15. Dispositif selon la revendication 13 ou 14, **caractérisé en ce que** la mesure de longue durée est effectuée sur un banc d'essai.

16. Dispositif selon la revendication 13 ou 14, **caractérisé en ce que** la mesure de longue durée du palier est effectuée dans l'installation.

17. Dispositif selon l'une des revendications 13 à 16, **caractérisé en ce que** la représentation est une représentation graphique.

18. Procédé selon l'une des revendications 13 à 17, **caractérisé par** au moins un capteur de courant de palier et/ou un capteur de tension de palier sur le moteur.

19. Dispositif selon l'une des revendications 13 à 18, **caractérisé par** des moyens de détection de la cause d'un dommage potentiel par reconnaissance d'un motif caractéristique dans la représentation de l'évaluation.

20. Dispositif selon l'une des revendications 13 à 19, **caractérisé par** d'autres capteurs pour détecter d'autres grandeurs de mesure, en particulier pour les vibrations, la température, la tension aux bornes du moteur, l'état du lubrifiant, le courant du moteur ou des paramètres de convertisseur.

21. Dispositif selon l'une des revendications 13 à 20, **caractérisé par** d'autres moyens pour l'interrogation à distance de la grandeur de mesure caractéristique pour l'apparition de courants de palier.

22. Dispositif selon l'une des revendications 13 à 21, **caractérisé par** des moyens pour commander le type d'évaluation par l'intermédiaire d'ordres, en particulier de modifications de la plage de mesure, du filtre de mesure, de la fréquence de mesure, de paramètres d'évaluation et de la largeur d'intervalle d'histogramme.
